# EUROPEAN PATENT APPLICATION

(11) **EP 4 840 763 A1**
(43) Date of publication of application: **18.11.2026**
(21) Application number: 25175778.7
(22) Date of filing: 12.05.2025
(51) Int. Cl.: B64D 41/00

(54) **METHOD AND SYSTEM FOR GENERATING HYDRAULIC POWER IN AN AIRCRAFT, AND AIRCRAFT**

(71) Applicant: AIRBUS Operations GmbH, 21129 Hamburg (DE)
(72) Inventor: Hoffmann, Lars, 21129 Hamburg (DE); Hummel, Gerhard, 21129 Hamburg (DE); Hamm, Martin, 21129 Hamburg (DE)
(74) Representative: KASTEL Patentanwälte PartG mbB

(57) **Abstract**

In a method and a system (10) for generating hydraulic power in an aircraft, an electric motor (14) is driving a hydraulic pump (12) of a hydraulic system (26) of an aircraft. The system (10) comprises a combustion microturbine (16) coupled to the hydraulic pump (12). The system (10) is configured to perform different modes of operation. Depending on different operational modes, the combustion microsystem (16) drives the hydraulic pump (12) as a supplement to the electric motor (14), and/or drives the hydraulic pump (12) in the event of a power failure to replace the electric motor (14), and/or drives the electric motor (14) for generating electric power (22).

## Description

The invention relates to a method for generating hydraulic power in an aircraft. Further, the invention relates to a system for generating hydraulic power for a hydraulic system of an aircraft, and to an aircraft.

This invention can be applied to aircrafts that utilize hydraulic systems. In particular, the invention can be applied in aircraft with electric architectures which need dissimilar power sources.

Hydraulic systems play a central role in ensuring the safe, efficient and reliable operation of various aircraft systems. With their high power-to-weight ratio and precise control, hydraulics remain a cornerstone technology in modern aviation, powering everything from flight controls to landing gear and brakes. Proper maintenance, monitoring and system design are essential to maintain hydraulic systems' performance and ensure safe flight operations.

Hydraulic systems are responsible for providing the power required to operate various flight-critical mechanisms. These include flight control surfaces such as ailerons, elevators, and rudders, landing gear including extension/retraction and steering, brakes e.g. for stopping the aircraft, cargo doors and ramps, flaps and slats for controlling lift during takeoff and landing, as well as aircraft systems like power steering e.g. for the nose wheel steering.

Conventional aircraft hydraulic power generation uses hydraulic pumps of different designs that are powered by the engine of the aircraft, or an electric motor, bleed air or ram air turbine.

Hydraulic systems further comprise a hydraulic fluid that transmits the power throughout the system, a reservoir that stores the hydraulic fluid and helps maintain the fluid's pressure and volume, actuators to convert hydraulic pressure into mechanical motion, control valves for controlling the flow and pressure of hydraulic fluid to different components of the system, as well as hoses, tubes, and fittings to carry the hydraulic fluid throughout the aircraft and to connect various components of the system.

Microturbines are commonly used to drive electrical generators in different applications today.

It is the object of the invention to provide an alternative method and system for generating hydraulic power in an aircraft.

The object is achieved by a method for generating hydraulic power in an aircraft, wherein an electric motor is driving a hydraulic pump of a hydraulic system of an aircraft, and wherein a combustion microturbine coupled to the hydraulic pump drives the hydraulic pump as a supplement to the electric motor, and/or drives the hydraulic pump in the event of a power failure to replace the electric motor, and/or drives the electric motor for generating electric power.

Combining a combustion microturbine with a hydraulic pump creates an alternative way to generate hydraulic power that can complement other power generation, which may be continuously or back-up, or back-up of electric driven power generation in case of electrical failure or loss.

Preferably, a fluid used in the hydraulic system of the aircraft is used for cooling one or more of the microturbine, the electric motor and the hydraulic pump.

In particular, driving the hydraulic fluid system may provide cooling to the microturbine to support long-haul and/or continuous operations by making use of heat transport via the fluid to a heat sink.

Preferably, the microturbine is attached to a common gearbox together with the electric motor that drives the hydraulic pump.

Preferably, the microturbine is attached directly to a common shaft together with the electric motor that drives the hydraulic pump.

The system is configured to perform different modes of operation, thus increasing the safety of an aircraft and leading to further advantages when it is equipped with the system.

Advantageously, the microturbine is coasting as long as there is no need to power it up.

This mode may be used as or named as "normal mode".

Preferably, the hydraulic pump is of the variable displacement type.

Advantageously, the electric motor coupled to the microturbine is operated at a fixed predetermined rotational speed or at a fixed predetermined speed range which is high enough to allow starting of the microturbine with the inherent kinetic energy or inherent kinetic or rotational inertia of the system.

Preferably, in case of a peak hydraulic power demand, the microturbine is fired-up to serve as a booster for the hydraulic pump. The main advantage is that only a very short transient time is needed to come to a boost mode, as the microturbine is already rotating.

Thus, a peak power management comprising a short fire-up is provided.

A further advantage is, that it is possible to use a smaller electric motor for driving the hydraulic pump, which may be not sized for peak loads but instead for maximum continuous loads, while peak loads are covered by microturbine's boost mode.

An operational mode in which the microturbine drives the hydraulic pump while the electric motor is inactive may form an "emergency mode 1".

Preferably, the microturbine is used as an emergency drive for the electric-motor driven hydraulic pump in such a way that the hydraulic pump continues to generate hydraulic power while the electric motor reverses to generate electricity while the microturbine is powered or is driving the electric motor and the hydraulic pump.

This operational mode, in which the microturbine drives the electric motor to generate electric power and the hydraulic pump to generate hydraulic power may be called "emergency mode 2"

Preferably, the microturbine is fired-up in advance of an actual failure as a precaution whenever the aircraft control system is anticipating a loss of electric power, e.g. in combination with "health of system" prognostics.

This is possible, as it is constantly rotating at a speed at or above the fire-up speed of the microturbine. It can be stopped easily at any time, if required, by cutting the fuel flow.

This operational mode may form a predictive starting of an emergency mode.

Preferably, the microturbine is fired-up immediately when the aircraft control system is determining a loss or failure of electric power.

This is possible, as the microturbine is constantly rotating at a speed at or above fire-up speed. Thereby it can be used as back-up power for hydraulic consumers.

As the microturbine is e.g. fired-up in case of a peak power demand to serve as a booster, as described above, which usually happens few times per flight cycle caused by a high-power consumer such as landing gear, the health status of the microturbine is preferably monitored once per flight, i.e. with a high reliability status check.

Due to use of the microturbine, e.g. once per flight, its health status is preferably checked which reduces dormant failures.

Preferably, in case of low electric power supply, the nominal hydraulic system pressure is reduced or adapted to allow high flow, i.e. high actuator deflection rates, and low pressure or force conditions.

This feature can be used also for low load conditions, such as a pre-flight check of flight control actuators on ground.

According to an aspect of the invention, a system for generating hydraulic power in an aircraft is provided, comprising a hydraulic pump for generating pressure in a hydraulic system of an aircraft, an electric motor connected to the hydraulic pump for driving the hydraulic pump, and a combustion microturbine coupled to the hydraulic pump, wherein the combustion microturbine is configured to drive the hydraulic pump as a supplement to the electric motor, and/or to drive the hydraulic pump in the event of a power failure to replace the electric motor, and/or to drive the electric motor for generating electric power.

Preferably, the system comprises a fluid line connected to or being part of the hydraulic system of the aircraft, for guiding at least a portion of the fluid within the hydraulic system through the system to cool it.

Preferably, the system comprises a common gearbox and/or a common shaft connecting the system for generating hydraulic power together with the electric motor to the hydraulic pump.

Preferably, the system is configured for being used in the method according to the invention.

According to a further aspect, the invention provides an aircraft comprising a system according to the invention.

Preferably, the microturbine can be fueled by conventional kerosine, sustainable aviation fuels or hydrogen.

The microturbine may comprise means to offload the microturbine when coasting.

When coasting, the microturbine air-flow preferably supports the cooling of itself, and/or the cooling of the attached gearbox and/or the electric motor, and/or the hydraulic pump, and/or associated power electronics, if applicable.

In sum, the invention uses a combustion microturbine to drive a hydraulic pump for generation of hydraulic power in aircraft systems.

A preferred embodiment of the invention and preferred examples of the method according to the invention are described in more detail in the following with reference to the accompanying drawings, which show in
- **Fig. 1**: a schematic view of a system for generating hydraulic power for a hydraulic system of an aircraft according to a preferred embodiment of the invention, when operated in a first operational mode;
- **Fig. 2**: a schematic view of a cooling system provided in the system shown in Fig. 1;
- **Fig. 3**: the system shown in Fig. 1, when operated in a second operational mode;
- **Fig. 4**: the system shown in Fig. 1, when operated in a third operational mode;
- **Fig. 5**: the system shown in Fig. 1, when operated in a fourth operational mode; and
- **Fig. 6**: the system shown in Fig. 1, when operated in a fifth operational mode.

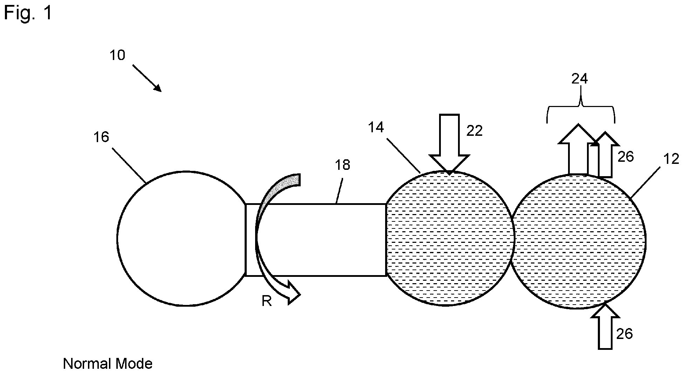

First, reference is made to **Fig 1** which shows a system 10 for generating hydraulic power for a hydraulic system 26 of an aircraft, according to a preferred embodiment of the invention.

The system 10 comprises a hydraulic pump 12 for generating pressure in the hydraulic system of the aircraft, and an electric motor 14 mechanically connected to the hydraulic pump 12 for driving the hydraulic pump 12. The system 10 further comprises a combustion microturbine 16 which is mechanically coupled to the hydraulic pump 12. The combustion microturbine 16 is configured to drive the hydraulic pump 12 as a supplement to the electric motor 14, and/or to drive the hydraulic pump 12 in the event of an electric power failure to replace the electric motor 14, and/or to drive the electric motor 14 for generating electric power.

The different options of using the microturbine 16 can all be performed by system 10, depending on different needs which may occur.

The microturbine 16 is attached to a common gearbox 18, together with the electric motor 14 configured for driving the pump 12. Alternatively, or as an option, the microturbine 16 is directly attached to a common shaft together with the electric motor 14 driving the pump 12.

The microturbine 16 has means to offload the microturbine 16 when coasting, i.e. when being driven by the electric motor 14. In a preferred operational mode, the microturbine 16 is coasting and thus delivering no power as long as there is no need to power it up.

Preferably, the electric motor 14 as well as the microturbine 16 can be decoupled from the gearbox 18 or the driveshaft.

The microturbine 16 can e.g. be fueled by conventional kerosine, sustainable aviation fuels or hydrogen.

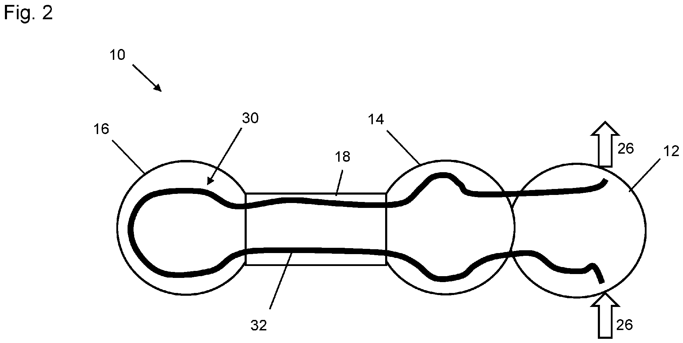

As shown in **Fig. 2**, all components of the system 10 which create heat are cooled by an integrated hydraulic system 30 formed by one or more fluid lines 32. That system 30 forms a heat sink at the microturbine 16 and thus a cooling system. The integrated hydraulic system 30 comprises a fluid that forms a heat transport medium within the fluid line 32. Fluid line 32 is configured to cool the pump 12, the motor 14, gearbox 18 and microturbine 18 in this embodiment.

Preferably, the fluid lines 32 are part of the hydraulic system 26. That means, that the fluid within the hydraulic system 26 of the aircraft is additionally used to cool the system 10.

Referring again to **Fig. 1****,** a first operational mode of the system 10 called "normal mode" is described now. In this mode, the electric motor 14 is active and drives the hydraulic pump 12, while the microturbine 16 is not active, i.e. it is coasting or running at idle due to its coupling to the motor 14 via the common gearbox 18 or the common shaft.

In this figure and in all following figures, the rotation or rotational speed of common gearbox 18 is indicated in the figure by arrow R. Elements or parts of system 10 which are active in the respective mode are indicated by a hatched pattern in the respective element. Elements or parts of system 10 which are not active in the respective mode are not filled with a pattern.

In the normal mode, electric power 22 from another source outside system 10 is delivered to motor 14, while the pump 12 delivers hydraulic power 24 to the hydraulic system 26 of the aircraft.

The electric motor 14 may be operated at a fixed rotational speed R, which is high enough to allow starting of the microturbine 16 with the inherent kinetic or rotational inertia of the system 10. That leads to the advantage, that the microturbine 16 can be fired-up at any time without being accelerated first, as it is already rotating at a speed necessary for its ignition. For this operation, the hydraulic pump 12 is preferably of the variable displacement type.

The electric motor 14 may also be operated at a speed range high enough to allow starting of the microturbine 16 with inherent kinetic or rotational inertia of the system 10. That leads as well to the advantage, that the microturbine 16 can be fired-up at any time without being accelerated first, as it is already rotating at a speed necessary for its ignition. For this operation, the hydraulic pump 12 is preferably of the fixed or variable displacement type.

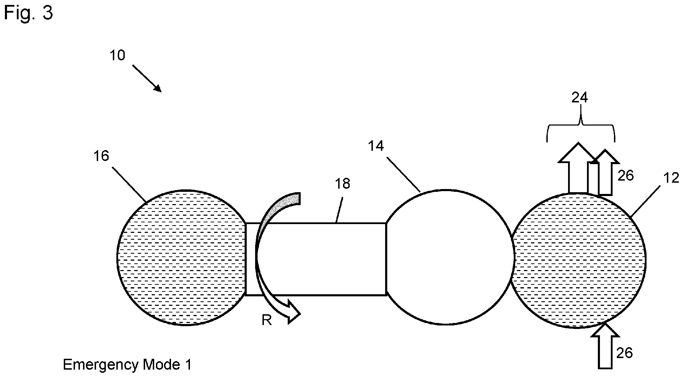

Referring to **Fig. 3** now, a second operational mode of the system 10 will be described. That mode is called "emergency mode 1". In this mode, the electric motor 14 is inactive, e.g. due to a failure in the electric system for driving the motor. Now, when this happens, the microturbine 16 takes over, i.e. it becomes active, and drives the pump 12 via the common gearbox 18 or the common driveshaft, instead of the motor 14. The pump 12 continues delivering the hydraulic power 24 for the fluid within hydraulic system 26. Thus, the hydraulic pump 12 remains active.

The microturbine 16 drags the inactive motor 14 via the common gearbox 18 or via the common driving shaft.

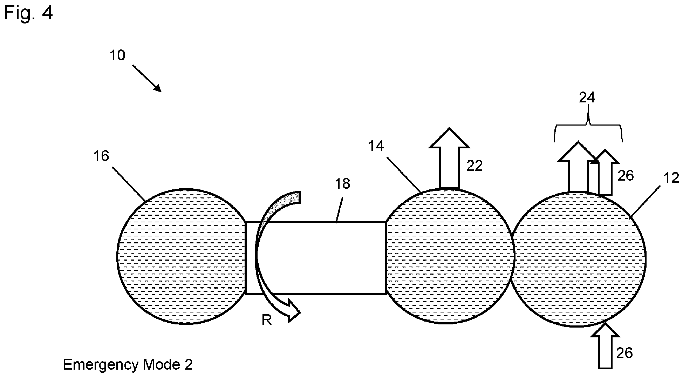

Referring to **Fig. 4** now, a third operational mode of the system 10 will be described. That mode is called "emergency mode 2". This mode may be used as well in case of a failure in the electric system of the aircraft for driving the motor.

This mode corresponds to the normal mode described above with reference to Fig. 1, however the microturbine 16 drives the electric motor 14 and the hydraulic pump 12 via gearbox 18 or the common shaft. Thus, microturbine 16, electric motor 14 and hydraulic pump 12 are active in the emergency mode 2.

The motor 14 is used or operated in this mode as a generator for generating the electric power 22. The electric power is provided to the A/C electric system. Hydraulic pump 12 is driven by microturbine 16.

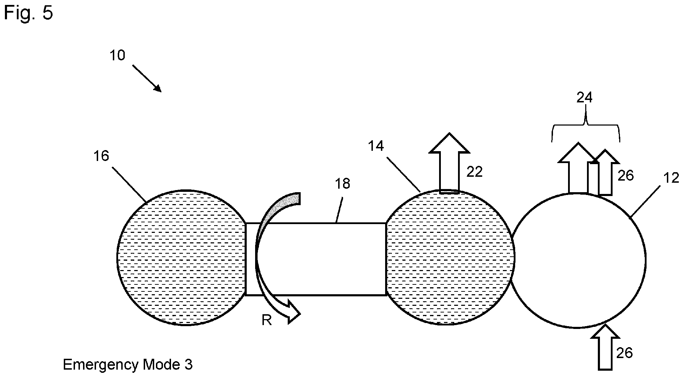

Referring to **Fig. 5** now, a fourth operational mode will be described, which is called "emergency mode 3". In this mode, the microturbine 16 is active and drives only the motor 14 via gearbox 18 or the common shaft, so that motor 14 is active and working as a generator, while the hydraulic pump 12 is not active, i.e. is not driven by microturbine 18.

This mode is particularly relevant when there is no need for hydraulic power 24 while there is a need for electric power 22.

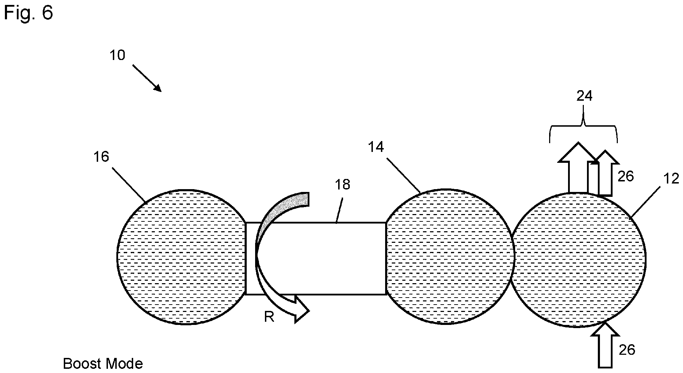

Referring to **Fig. 6** now, a fifth operational mode will be described, which is called "boost mode". Microturbine 16, electric motor 14 and hydraulic pump are active in the boost mode. In this mode, the electric motor 14 runs at a rotational speed R which is optimized for the motor 14.

As a consequence, the motor 14 can be configured in a way that it optimally drives the hydraulic pump 12 at a certain defined rotational speed, so that it covers the whole flight profile of the aircraft, except peak loads which occur when large hydraulic consumers are operated, like e.g. landing gears.

Such peak loads are covered in this mode by the microturbine 16, which provides the "boost mode" when needed. In this way, the microturbine 16 delivers mechanical power for driving the hydraulic pump 12 during peak loads. In this case, the rotational speed R of the gearbox 18 or the common shaft is increased due to the additional power delivered by the microturbine 16.

The various operational modes described above are performed by system 10 depending on the situation which may occur during operation of an aircraft. In this way, the system ensures continued safe flight and landing due to a normal mode and different emergency modes. Moreover, due to the boost mode, the system 10 enables a smaller electric motor for driving the hydraulic pump, thus increasing efficiency and saving weight.

### List of reference signs:

- 10: system
- 12: hydraulic pump
- 14: electric motor
- 16: microturbine
- 18: common gearbox/driving shaft
- 22: electric power
- 24: hydraulic power
- 26: hydraulic system
- 30: internal hydraulic system
- 32: fluid line

- R: rotation / rotational speed

## Claims

1. Method for generating hydraulic power in an aircraft, wherein an electric motor (14) is driving a hydraulic pump (12) of a hydraulic system (26) of an aircraft,
**characterized in that**
a combustion microturbine (16) coupled to the hydraulic pump (12)
- drives the hydraulic pump (12) as a supplement to the electric motor (14) and/or
- drives the hydraulic pump (12) in the event of a power failure to replace the electric motor (14), and/or
- drives the electric motor (14) for generating electric power (22).

2. Method according to claim 1, **characterized in that** a fluid used in the hydraulic system (26) is used for cooling one or more of the microturbine (16), the electric motor (14) and the hydraulic pump (12).

3. Method according to claim 1 or 2, **characterized in that** the microturbine (16) is attached
- to a common gearbox (18) together with the electric motor (14) that drives the hydraulic pump (12), or
- directly to a common shaft together with the electric motor (14) that drives the hydraulic pump (12).

4. Method according to one of the preceding claims, **characterized in that** the electric motor (14) is coupled to the microturbine (16) and is operated at a fixed rotational speed (R) or a fixed speed range which is high enough to allow an immediate start of the microturbine (16) with inherent kinetic energy.

5. Method according to one of the preceding claims, **characterized in that** in case of peak hydraulic power demand, the microturbine (16) is fired-up to serve as a booster for the hydraulic pump (12).

6. Method according to one of the preceding claims, **characterized in that** the microturbine (16) is used as an emergency drive for the electric-motor driven hydraulic pump (12), wherein the hydraulic pump (12) continues to generate hydraulic power (24) while the electric motor (14) reverses to generate electric power (22) while the microturbine (16) is driving the electric motor (14) and the hydraulic pump (12).

7. Method according to one of the preceding claims, **characterized in that** the microturbine (16) is fired-up
- as a precaution when an aircraft control system is anticipating loss of electric power, and/or
- immediately when the aircraft control system is determining a loss of electric power

8. Method according to one of the preceding claims, **characterized in that** in case of low electric power supply the nominal pressure of the hydraulic system (26) is reduced or adapted to allow high flow and low pressure conditions.

9. System for generating hydraulic power in an aircraft, comprising a hydraulic pump (12) for generating pressure in a hydraulic system (26) of an aircraft, and
an electric motor (14) connected to the hydraulic pump (12) for driving the hydraulic pump (12),
**characterized in that**
a combustion microturbine (16) is coupled to the hydraulic pump (12), wherein the combustion microturbine (16) is configured
- to drive the hydraulic pump (12) as a supplement to the electric motor (14) and/or
- to drive the hydraulic pump (12) in the event of a power failure to replace the electric motor (14), and/or
- to drive the electric motor (14) for generating electric power.

10. System according to claim 9, **characterized by** a fluid line (32) connected to or being part of the hydraulic system (26) of the aircraft for guiding at least a portion of the fluid within the hydraulic system (26) through the system (10) to cool it.

11. System according to claim 9 or 10, **characterized by** a common gearbox (18) and/or a common shaft connecting the system for generating hydraulic power (10) together with the electric motor (14) to the hydraulic pump (12).

12. System according to one of claims 9 to 11, **characterized in that** it is configured for being used in the method according to one of claims 1 to 8.

13. Aircraft, comprising a system (10) according to one of claims 9 to 12.
